# FASCICULE DE BREVET EUROPEEN

(11) **EP 2 323 505 B1**
(45) Date de publication et mention de la délivrance du brevet: **18.01.2012**
(21) Numéro de dépôt: 09784410.4
(22) Date de dépôt: 18.06.2009
(51) Int. Cl.: A23P 1/12, A22C 7/00, A22C 11/02, A23G 3/00, A23G 9/22, B29C 47/78, B29C 47/92

(54) **PROCEDE POUR LA MISE EN FORME D'UN PRODUIT ALIMENTAIRE PAR CRYOEXTRUSION METTANT EN OEUVRE UNE REGULATION DE TEMPERATURE PREDICTIVE**
VERFAHREN ZUM FORMEN EINES NAHRUNGSMITTELPRODUKTS DURCH CRYOEXTRUSION UNTER VERWENDUNG VON PRÄDIKTIVER TEMPERATURSTEUERUNG
METHOD FOR SHAPING A FOOD PRODUCT BY CRYOEXTRUSION EMPLOYING PREDICTIVE TEMPERATURE REGULATION

(30) Priorité: 25.06.2008 FR 0854215
(43) Date de publication de la demande: 25.05.2011
(73) Titulaire: L'Air Liquide Société Anonyme pour l'Etude et l'Exploitation des Procédés Georges Claude, 75007 Paris (FR)
(72) Inventeur: COUSIN, Franck, F-44250 Saint Brevin les Pins (FR); FREDERICK, Willy, F-17270 Clerac (FR); KOWALEWSKI, Pierre, F-75016 Paris (FR); ALO, Didier, F-76280 Criquetot l'Esneval (FR)
(74) Mandataire: Mellul-Bendelac, Sylvie Lisette
(86) Numéro de dépôt international: PCT/FR2009/051167
(87) Numéro de publication internationale: WO 2010/007280

(56) Documents cités:
- FR-A- 2 915 351
- US-A1- 2003 056 657
- US-A1- 2005 048 179
- US-A1- 2005 132 902
- US-A1- 2006 283 196

## Description

La présente invention est relative au domaine de l'industrie agroalimentaire, et concerne plus particulièrement un procédé d'extrusion à froid de produits alimentaires pour leur mise en forme.

On parlera dans ce qui suit indifféremment d'extrusion, de cryoextrusion, d'extrusion à froid, d'extrudeuse, ces termes sont parfaitement identifiés pour l'homme du métier, certains utilisent également le vocable de « mélangeur » ou « mélangeur à vis ».

La mise en forme de produits alimentaires est devenue un enjeu majeur pour les industriels au cours des dernières années. En effet, les consommateurs demandent de plus en plus des produits alimentaires en portions, aux formes originales et variées, permettant de doser aisément les quantités nécessaires à leur repas et suscitant également le désir gustatif. Un autre enjeu est de fournir aux professionnels de l'alimentaires des produits dosés facilement utilisables.

Pour répondre à cette exigence, les industriels ont à leurs dispositions différentes techniques, qui ne sont toutefois pas pleinement satisfaisantes.

La technique la plus simple est la technique de l'emporte pièce ou du moule. L'inconvénient majeur de cette technique est qu'elle ne permet pas d'obtenir des formes complexes ni d'utiliser une matière première liquide, par ailleurs elle est une source importante de déchets qu'il est difficile de réutiliser compte tenu des normes alimentaires de plus en plus rigoureuses.

Une technique couramment utilisée est la « machine à boulet », consistant en deux cylindres creux contrarotatifs entre lesquels on verse une pâte alimentaire pré-surgelée ou non, qui ressort ensuite sous forme de « boulets », c'est-à-dire de pellets, qui peuvent subir ensuite une étape de congélation. Un tel procédé est utilisé pour la fabrication des produits alimentaires surgelés du type soupe en « blocs », épinards en portions, etc... Les produits ainsi obtenus ne sont pas satisfaisants car non seulement ils présentent un aspect extérieur inesthétique, nécessitant l'utilisation d'emballages opaques, mais ils possèdent de plus une forme limitée par la géométrie de la machine qui ne permet de réaliser que des boulets, en aucun cas des formes ludiques par exemple pour les enfants. Enfin, il est impossible de doser de manière précise la quantité de produit alimentaire des « boulets ». Les pertes de produit sont également importantes.

Une autre technique pouvant être utilisée est l'extrusion de produits alimentaires, en particulier l'extrusion à froid. De nombreux produits alimentaires peuvent être extrudés, qu'ils soient solides ou semi-solides, comme par exemple les pâtes pour pain, biscuits ou produits apéritifs, les amidons, les légumes, les viandes, les glaces, le chocolat, les bonbons mous, le chewing-gum (« gomme à mâcher »), la pâte de fruit, le caramel, les céréales, les protéines végétales, la caséine, le fromage fondu, les aliments pour animaux, etc......cette liste n'étant bien sur nullement exhaustive.

Classiquement, une extrudeuse industrielle consiste en un long cylindre comprenant au moins une vis d'extrusion à l'intérieur, à l'une de ses extrémités une trémie d'alimentation et à l'autre une buse de sortie. Généralement, la vis d'extrusion est entraînée par un moteur rotatif dont la vitesse de rotation est contrôlée par un variateur de fréquence.

Lors de l'extrusion à basse température, soit les produits sont refroidis voire congelés en amont de l'étape d'extrusion, comme décrit par exemple dans le document US-4,795,650, soit les produits sont directement refroidis voire congelés dans l'extrudeuse elle-même. Dans ce dernier cas, soit le refroidissement est réalisé par l'extérieur de l'extrudeuse, c'est-à-dire qu'un fluide de refroidissement circule autour du corps de l'extrudeuse, par exemple de la saumure, de l'ammoniac, de l'eau glycolée, de l'azote liquide, du dioxyde de carbone , comme décrit par exemple dans US2003/0211192 ou US2005/0132902 ; soit le refroidissement est réalisé par contact direct en injectant un fluide de refroidissement dans le produit extrudé, comme décrit par exemple dans les documents EP-0250381 ou US-2006/0283196.

Selon une des versions connues de la cryoextrusion, le moyen de circulation d'un fluide réfrigérant consiste en une double enveloppe entourant la vis d'extrusion et dans laquelle circule un fluide réfrigérant. La double enveloppe peut être constituée de plusieurs modules indépendants reliés entre eux par des conduits du type tuyaux, permettant le passage du fluide réfrigérant d'un module à l'autre, la ou les vis d'extrusion venant se placer dans le cylindre formé par l'association des modules de la double enveloppe, chaque module étant muni de son arrivée de fluide réfrigérant, et de son extraction de gaz, dans certains cas, certains des modules sont branchés en série de circulation de gaz, deux par deux.

Ces procédés, théoriquement attractifs, sont difficilement exploitables industriellement. En effet, ils présentent l'inconvénient majeur de bloquer la ou les vis de l'extrudeuse par une descente trop rapide de la température du produit. En effet, lorsque la température du produit alimentaire extrudé baisse trop rapidement, la viscosité du produit augmente très rapidement et entraîne une augmentation du couple sur la ou les vis et donc de l'intensité du moteur, déclenchant ainsi la sécurité thermique du moteur et donc le blocage de celui ci. Pour cette raison, ce type de procédé d'extrusion à froid est difficilement utilisable en tant que tel en industrie pour la mise en forme de produits alimentaires ayant une forte viscosité.

Par ailleurs il faut signaler que le contrôle de la température de sortie des produits s'avère en pratique très difficile.

La température du produit n'étant pas facilement contrôlable, le produit de sortie a tendance à progressivement devenir trop froid, ce qui a pour conséquence de durcir le produit et de risquer le blocage de la machine, à contrario si les modules sont trop chauds il est difficile d'obtenir la température souhaitée.

La situation actuelle est caractérisée par le fait que c'est l'opérateur qui gère de façon quasi empirique la situation : il mesure la température des produits en sortie de formage et approximativement soit n'entreprend aucun action, soit augmente l'injection de cryogène pour tenter de rattraper une température de sortie insuffisamment basse.

Ainsi, le problème technique auquel se propose de répondre la présente invention est la mise à disposition d'un procédé industriel permettant de conférer une texture suffisamment solide à des produits alimentaires initialement liquides, semi-solides et/ou solides, pour effectuer une mise en forme de ceux-ci en portions calibrées et possédant un aspect esthétique satisfaisant, et apportant une bonne maîtrise de la température d'obtention des produits.

Comme on le verra plus en détail dans ce qui suit, ce problème a été résolu par la présente invention, qui propose une amélioration du procédé d'extrusion à froid, encore appelé cryoextrusion.

Pour cela, le procédé proposé est basé sur l'approche suivante :
- un système d'acquisition et de traitement des données acquière et gère les températures de gaz en sortie du ou des modules et est apte à commander la modification de la ou des injections de cryogène (par exemple d'azote liquide) via des électrovannes ou vannes de régulation ;
- le système calcule la différence entre la température effective du produit et la consigne de température souhaitée pour le produit en sortie d'équipement. En fonction du signe de ce résultat et de sa valeur absolue, le système détermine les consignes de température à injecter dans les boucles de régulation des températures des modules de refroidissement.

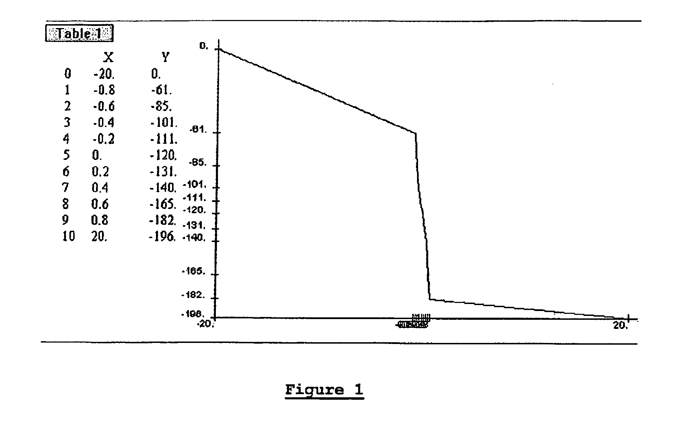

Ces consignes sont calculées par rapport à un modèle qui est programmé dans le système.
- Comme on le visualisera mieux à l'aide de la figure 1 ci-après annexée, la courbe représente X en abscisses = différence Δ entre la température effective du produit et la consigne de température souhaitée pour le produit en sortie et Y en ordonnées = consigne à appliquer pour la température des gaz en sortie du ou des modules, et est organisée en trois zones linéaires : une zone très abrupte autour d'une différence Δ voisine de 0, entourée par deux zones beaucoup plus progressives de quasi plateaux , la courbe concerne un cas où le cryogène est l'azote liquide ;
- Plus l'écart Δ est négatif (le produit est trop froid), moins les modules doivent être refroidis (le système va demander une consigne de température des gaz voisine de 0°C), plus l'écart tend vers 0 plus la température des gaz recherchée est celle d'équilibre (sur l'exemple de courbe donnée ici, voisine de -120 °C, valeur à laquelle pour un produit donné, à un débit donné, l'échange thermique amènera le produit à sa température de formage recherchée), plus l'écart est positif (le produit est insuffisamment froid), plus l'injection de cryogène doit être boostée (le système va demander une consigne de température des gaz voisine de - 196 °C).

On comprend bien à la lecture de la figure 1 que les « quasi plateaux » évoqués ci-dessus sont déterminés dans chaque cas d'équipement, de produit etc....mais ils doivent s'entendre comme des portions de droite s'étendant sur quelques degrés Celsius à quelques dizaines de degrés Celsius, pas davantage, et tranchant clairement avec la portion abrupte (quasi verticale) s'étendant autour du 0.

La température d'équilibre est quant à elle déterminée lors de tests préliminaires.

A titre illustratif, elle est fixée par la méthode suivante :
- en fonction de la composition du produit, on peut calculer sa température de congélation,
- ensuite en fonction de la texture obtenue lors des tests préliminaires, si la texture est trop molle, on descend cette température, si la texture est trop dure, on augmente la température,

- par exemple on sait que pour un produit donné, sa température de figeage ou la température souhaitée dans le cas d'un refroidissement est de -4°C, nous allons donc encoder cette valeur lors des tests préliminaires et laisser le système réguler pour obtenir -4°C. Par pallier de 0,5°C en dessous de 0°C, on vérifie la texture, et encodons la température d'équilibre des gaz la plus appropriée au résultat souhaité.
- la structure adoptée permet de toujours revenir au point d'équilibre : plus la température du produit s'écarte de la consigne plus la réaction induite est forte.

La présente invention a donc pour objet un procédé pour la mise en forme d'au moins un produit alimentaire par cryoextrusion à l'aide d'une extrudeuse comprenant au moins une vis d'extrusion entraînée par un moteur et une buse en sortie de ladite au moins une vis d'extrusion, l'extrudeuse étant munie d'une double enveloppe entourant la vis d'extrusion et dans laquelle circule un fluide réfrigérant, double enveloppe constituée d'un seul ou de plusieurs modules indépendants chaque module étant muni de son arrivée de fluide réfrigérant et de son extraction de gaz, caractérisé par la mise en oeuvre des mesures suivantes :
- on dispose d'un système d'acquisition et de traitement des données apte à acquérir la température du produit en sortie de vis, à acquérir et gérer les températures de gaz en sortie du ou des modules et à commander des modifications de la ou des injections de fluide réfrigérant dans l'un ou plusieurs desdits modules ;
- on a préalablement déterminé et programmé dans ledit système une courbe, déterminée pour ledit produit à extruder, représentant en abscisses X la différence Δ entre la température effective du produit en sortie et la consigne de température souhaitée pour le produit en sortie, et en ordonnées Y la consigne à appliquer pour la température des gaz en sortie du ou des modules, la courbe étant organisée en trois zones linéaires : une zone abrupte autour d'une différence Δ voisine de 0, entourée par deux zones de quasi plateaux ;
- ledit système calcule la différence Δ entre la température effective du produit en sortie de vis et la consigne de température souhaitée pour le produit en sortie de vis ;
- en fonction du signe de la différence Δ et de sa valeur absolue, ledit système détermine sur ladite courbe la ou les consignes de température à injecter dans la ou les boucles de régulation de la température du ou des modules de refroidissement.

Selon l'une des mises en oeuvre avantageuse de l'invention, pour une finesse de régulation accrue, mais également pour s'adapter très aisément lors d'un changement de produit, on applique deux coefficients multiplicateurs à la courbe du produit précédent pour obtenir la nouvelle courbe s'appliquant au nouveau produit à traiter : une premier coefficient « a » est appliqué à l'écart Δ, un second coefficient multiplicateur « b » est appliqué à la consigne injectée pour la régulation des températures des gaz.

Ces coefficients sont typiquement déterminés par tâtonnement lors d'essais préliminaires, par exemple en modifiant 5 % par 5% la valeur de ceux-ci. Ils sont ajustés pour coller au mieux à la température idéale de formage ou d'abaissement de température.

Au sens de la présente invention, on entend par « cryoextrusion » un procédé d'extrusion réalisée à basse température, de préférence autour du point de congélation du produit alimentaire, plus préférentiellement juste au dessous du point de congélation commençant du produit alimentaire, plus préférentiellement encore entre 0,1°C et 1°C voire 2°C au dessous du point de congélation du produit alimentaire. Il est bien évident que la température utilisée pour la mise en oeuvre du procédé de cryoextrusion selon l'invention dépend de la composition du produit à extruder. En effet, il est bien connu de l'homme de l'art que la température de congélation commençante d'un produit alimentaire varie en fonction de sa composition, en particulier en fonction de sa composition en eau et en lipides. Plus le produit alimentaire sera riche en eau, plus la température nécessaire à sa mise en forme se rapprochera du point de solidification de l'eau, c'est-à-dire 0°C. Si par ailleurs un produit alimentaire est par exemple riche en beurre, dont la température de fusion est proche de 30°C, une température située entre 0°C et 30°C, variant en fonction du pourcentage en eau et des autres constituants, sera suffisante pour sa mise en forme.

Au sens de la présente invention, on entend par « mise en forme » l'action de conférer une forme déterminée à un produit alimentaire. Le procédé de cryoextrusion selon l'invention, en amenant le produit alimentaire extrudé à une température légèrement inférieure à son point de congélation commençant permet de conférer au produit une texture à la fois suffisamment souple pour effectuer une mise en forme, et suffisamment solide pour que la mise en forme soit conservée en sortie de l'extrudeuse. Cette mise en forme est réalisée à l'aide de la buse de l'extrudeuse, ayant une forme prédéterminée et étant placée directement en sortie de la vis d'extrusion. Les formes de buses les plus utilisées sont l'étoile, le carré, le rond, le triangle, les chiffres, les lettres et autres personnages, mais l'homme du métier est à même d'imaginer n'importe quelle autre forme susceptible de satisfaire la demande du client final.

Au sens de l'invention, on entend par double enveloppe l'association d'une première enveloppe intérieure enveloppant la ou les vis d'extrusion dont une face est en contact direct avec le produit alimentaire, avec une deuxième enveloppe extérieure concentrique à la première de sorte qu'un espace soit ménagé entre la première et la seconde enveloppe. Ainsi, l'espace ménagé entre les deux enveloppes permet la circulation d'un fluide réfrigérant. De cette manière, le fluide réfrigérant n'est pas en contact direct avec le produit alimentaire, mais en contact indirect par l'intermédiaire de l'enveloppe intérieure. Généralement, la double enveloppe comporte un orifice d'entrée, par lequel on introduit le fluide de refroidissement, et un orifice de sortie par lequel le fluide de refroidissement est évacué. Avantageusement le fluide de refroidissement est recyclé, soit par réinjection dans la double enveloppe, soit par injection directe sur le produit alimentaire dans la trémie d'alimentation de l'extrudeuse.

La double enveloppe au sens de l'invention peut également être constituée de plusieurs modules indépendants reliés entre eux par des conduits du type tuyaux, permettant le passage du fluide réfrigérant d'un module à l'autre. Dans ce mode de réalisation particulier, la ou les vis d'extrusion viennent se placer dans le cylindre formé par l'association des modules de la double enveloppe. Un tel mode de réalisation présente l'avantage de pouvoir adapter de manière rapide la taille de l'extrudeuse en fonction du produit alimentaire ou de la quantité de produit alimentaire à extruder.

De manière avantageuse, la surface de ladite double enveloppe intérieure en contact avec le produit alimentaire est maintenue à une température inférieure ou égale à environ -90°C. En effet, la Demanderesse, au cours de ses recherches, a pu déterminer que le maintien d'une température inférieure à environ -90°C de la surface de l'enveloppe en contact avec le produit alimentaire permet d'obtenir un phénomène de « zéro adhésion ». En d'autres termes, à des températures inférieures à -90°C, le produit alimentaire n'adhère plus à la surface de l'enveloppe. Ce type de phénomène n'est pas observable avec les appareils de l'art antérieur comportant une réfrigération mécanique, les températures atteintes n'étant pas assez basses. Ces appareils doivent donc faire face à un problème d'adhérence du produit alimentaire sur la surface de la double enveloppe. Le maintien de la surface de la double enveloppe intérieure en contact avec le produit alimentaire à une température inférieure ou égale à environ -90°C constitue donc un réel avantage vis-à-vis de l'art antérieur.

De préférence, ledit fluide réfrigérant est de l'azote liquide qui permet de maintenir aisément la surface de la double enveloppe en contact avec le produit alimentaire à une température inférieure ou égale à -90°C.

Préférentiellement, l'extrudeuse comprend deux vis d'extrusion. Avantageusement, l'extrudeuse comprend deux vis d'extrusion contrarotatives.

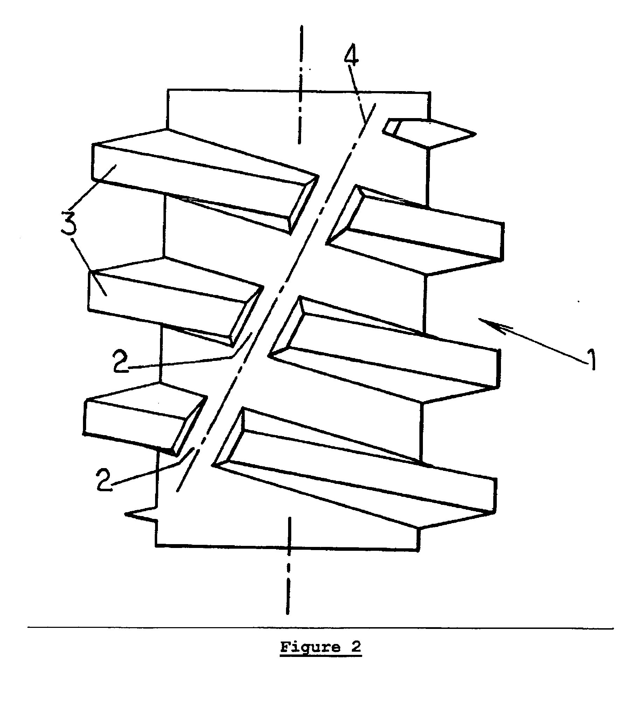

Avantageusement la ou les vis d'extrusion(s) possèdent une géométrie particulière, alternant portions du type « Archimède », permettant l'avancement du produit alimentaire vers la sortie de l'extrudeuse, et portions du type « malaxeuse », permettant le malaxage du produit alimentaire de sorte que l'on obtienne une bonne homogénéisation du produit à l'intérieur de l'extrudeuse. De même, le malaxage du produit alimentaire permet une meilleure répartition du froid au coeur du produit. Généralement, l'extrudeuse comprend deux vis d'extrusion contrarotatives comprenant au moins une portion du type Archimède et au moins une portion du type malaxeuse. Une vis particulièrement adaptée à la réalisation de l'invention peut comprendre une première portion malaxeuse puis une portion Archimède, ou alors une première portion Archimède puis une portion malaxeuse. Une autre vis adaptée à l'invention peut comprendre plusieurs portions alternées, Archimède/malaxeuse, et il appartient à l'homme de l'art de choisir la vis la mieux adaptée au produit alimentaire extrudé. Avantageusement, la portion de vis malaxeuse possède un pas de vis inversé par rapport à la portion du type Archimède. Un schéma non limitatif et simplement illustratif d'une portion malaxeuse est donné à la figure 2 : la portion malaxeuse (1), qui est de préférence rapportée à l'extrémité de chaque vis et à pas inversé, comprend des échancrures (2) par lesquelles le produit alimentaire doit passer. Chaque filet (3) de cette portion malaxeuse (1), avantageusement de pas constant, a des échancrures (2) réparties hélicoïdalement, lesdites échancrures (2) forment ainsi entre elles au moins une hélice (4) dont le pas est inversé par rapport à celui du filet (3) de la portion malaxeuse (1). La portion malaxeuse dont il est question ci-dessus est généralement rapportée et fixée par tout moyen connu à l'extrémité d'une vis d'extrusion, mais elle peut éventuellement faire partie de la vis elle-même.

De même, les vis utilisées peuvent comprendre optionnellement une zone de compression, c'est-à-dire par exemple une zone de réduction progressive du pas de vis ou d'augmentation du diamètre de l'arbre de la vis (par exemple un diamètre de l'arbre de la vis croissant à pas de vis constant).

Dans un mode de réalisation de l'invention, le procédé comprend en outre une étape de coupe de l'extrudat à l'aide d'un moyen de coupe placé directement en sortie de la buse. A l'aide de ce moyen de coupe, l'opérateur peut, en faisant varier la cadence de la coupe et/ou la vitesse d'extrusion, préparer des doses de produits alimentaires calibrées. Si l'on augmente la cadence de coupe les doses seront plus petites, et si l'on diminue la cadence de coupe les doses seront plus importantes. Un moyen de coupe au sens de l'invention peut être notamment un fil à découpe, une lame, un couperet, des ciseaux, un biseau, ou tout autre moyen susceptible de réaliser une coupe nette et rapide du produit alimentaire formé. Un moyen de coupe préféré est un couteau rotatif dont la lame effleure la buse de sortie de l'extrudeuse.

De manière alternative, le procédé tel que décrit plus haut peut consister en la mise en forme simultanée de deux produits alimentaires par « coextrusion ». La coextrusion trouve en particulier un intérêt dans l'enrobage des produits alimentaires ou dans la fabrication de produits alimentaires résultant de l'association de plusieurs produits alimentaires, par exemple de couches différentes de façon à avoir des doses unitaires esthétiquement attrayantes.

De manière particulièrement avantageuse, l'invention prévoit également l'enregistrement des paramètres de réglage relatifs à l'extrusion. En effet, chaque produit alimentaire nécessite des réglages particuliers de l'extrudeuse (« recettes »), et ces données peuvent être enregistrées de sorte qu'il suffise à l'opérateur d'indiquer à l'ordinateur quel produit il souhaite extruder pour que l'extrudeuse soit réglée automatiquement en conséquence. Deux types de paramètres peuvent notamment être enregistrés :
- les paramètres propres au produit alimentaire à extruder, à savoir par exemple la température de congélation commençante du produit, sa variation d'enthalpie en fonction de la température, qui sont notamment dépendantes de la teneur en eau du produit, de la teneur en matières grasses......, et
- les paramètres propres à l'extrudeuse, à savoir notamment le nombre et le type de vis, le nombre et le type de modules de double enveloppe, la vitesse de rotation de la vis, etc....

L'opérateur, disposant de ces données préenregistrées, n'aura plus qu'à paramétrer la machine en fonction des caractéristiques de son produit.

La présente invention vise par exemple les produits alimentaires choisis parmi les purées de légumes, timbales de légumes, palets et galettes de légumes, les épinards hachés, les potages, veloutés, soupes, bouillons, sauces, plats préparés, préparations de poissons notamment les bâtonnets de poissons, préparations pour crêpes, viande hachée, saucisses, nuggets, herbes surgelées, fromages en portions, gâteaux apéritifs, céréales, fruits, compotes, sauces et nappages sucrés, glaces à l'eau, crèmes glacées et desserts glacés.

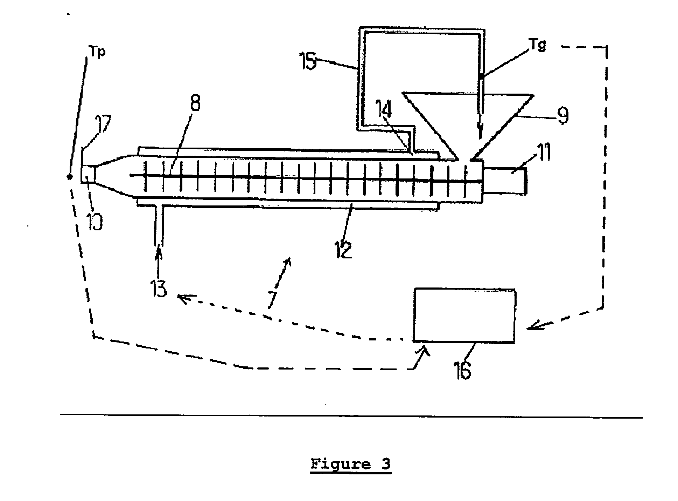

La figure 3 est un schéma d'une installation particulière selon l'invention, vue en coupe. L'installation (7) est constituée d'une vis d'extrusion (8), d'une trémie d'alimentation (9) et d'une buse de sortie (10). La vis d'extrusion (8) est entraînée par un moteur (11). L'installation (7) comporte également une double enveloppe (12) enveloppant la vis d'extrusion (8). Cette double enveloppe comporte un orifice d'entrée (13) du fluide de refroidissement, ledit fluide circulant tout le long de la double enveloppe autour de la vis d'extrusion jusqu'à l'orifice de sortie (14) relié à un conduit (15) permettant si cela est souhaité la réinjection du fluide de refroidissement dans la trémie d'alimentation (9) sur le produit alimentaire, autorisant ainsi un recyclage du fluide de refroidissement.

L'installation est par ailleurs munie d'un système 16 d'acquisition et de traitement des données apte à acquérir la température Tp du produit en sortie de vis, à acquérir et gérer les températures Tg de gaz en sortie du ou des modules et à commander des modifications de la ou des injections de fluide réfrigérant dans l'un ou plusieurs des dits modules en fonction de la différence Δ entre la température effective du produit en sortie et la consigne de température souhaitée pour le produit en sortie et de la courbe établie pour le produit considéré, conformément à la présente invention.

La présente invention a été appliquée avec succès pour former de la crème de chèvre, du caillé de fromage, ou encore des épinards à la crème, en adaptant dans chaque cas, grâce à des coefficient « a » et « b », la courbe type de la figure 1, et il a ainsi été possible d'obtenir des formes que les sites producteurs ne pouvaient obtenir par leurs méthodes de production antérieures.

La courbe de la figure 1 a ainsi été utilisée avec succès pour fabriquer du beurre dit tendre ou facile à tartiner.

On le sait il existe plusieurs méthodes d'élaboration de beurre tendre, parmi lesquelles :
- Le fractionnement par voie sèche.
- La cristallisation par tunnel cryogénique.
- La cristallisation par cryoextrusion.

A titre de rappel, le fractionnement par voie sèche consiste à faire fondre de la matière grasse par la chaleur, puis en la refroidissant lentement tout en l'agitant, on provoque la cristallisation d'une partie de la masse en fusion. Cette partie comprend les constituants du beurre ayant les points de fusion les plus élevés, devient ainsi solide, et est alors extraite par filtration. Les deux «fractions» obtenues, nommées par abus de langage «oléine» pour la fraction fluide, et «stéarine» pour la fraction solide, peuvent à leur tour être fractionnées, et ainsi de suite.... On peut alors fabriquer toute une gamme de fractions de caractéristiques diverses, que l'on peut alors mélanger à bon escient pour obtenir des produits ayant des caractéristiques données et souhaitées.

On le conçoit, très séduisantes théoriquement, ces opérations ne sont pourtant ni simples à réaliser dans la pratique, ni parfaitement connues, ni maîtrisées en ce qui concerne la composition et les caractéristiques rhéologiques réelles des fractions obtenues.

S'agissant de la cristallisation en tunnel cryogénique, plus la vitesse de refroidissement est rapide, et plus on formera de matière grasse solide. Il se forme alors de nombreux points de cristallisation, conduisant à une multitude de cristaux fins et homogènes.

La matière grasse liquide restante est alors riche en acides gras courts et insaturés à faible point de fusion. Cette technique conduit à l'obtention d'un beurre plus mou, recherché dans la fabrication des beurres d'hiver.

Quand la vitesse de refroidissement est lente il se forme des gros cristaux qui conduiront à un beurre plus ferme, recherché dans la fabrication des beurres d'été.

La cryoextrusion permet quant à elle de maîtriser la cinétique de température (baisse rapide et remontée rapide de la température du beurre). L'utilisation d'azote liquide permet un transfert rapide des frigories, et empêche les phénomènes de collage du beurre sur les parois des tunnels dans les techniques utilisant un tunnel. Le système de régulation selon la présente invention permet de gérer de la meilleure manière le fonctionnement de l'extrusion, mais a également démontré une baisse notable de la consommation d'azote liquide par kilo de produit fabriqué, par rapport aux procédés cryogéniques actuels, notamment de cristallisation en tunnel cryogénique, la consommation étant divisée par un facteur allant de 5 à 10 selon les lots et conditions testées, gamme qui se révèle donc dans tous les cas considérablement avantageuse.

## Revendications

1. Procédé pour la mise en forme d'au moins un produit alimentaire par cryoextrusion à l'aide d'une extrudeuse comprenant au moins une vis d'extrusion entraînée par un moteur et une buse en sortie de ladite au moins une vis d'extrusion, l'extrudeuse étant munie d'une double enveloppe entourant la vis d'extrusion et dans laquelle circule un fluide réfrigérant, double enveloppe constituée d'un seul ou de plusieurs modules indépendants chaque module étant muni de son arrivée de fluide réfrigérant et de son extraction de gaz, **caractérisé par** la mise en oeuvre des mesures suivantes :
- on dispose d'un système d'acquisition et de traitement des données apte à acquérir la température du produit en sortie de vis, à acquérir et gérer les températures de gaz en sortie du ou des modules et à commander des modifications de la ou des injections de fluide réfrigérant dans l'un ou plusieurs des dits modules,
- on a déterminé et programmé dans ledit système une courbe, déterminée pour ledit produit à cryoextruder, représentant en abscisses X la différence Δ entre la température effective du produit en sortie et la consigne de température souhaitée pour le produit en sortie, et en ordonnées Y la consigne à appliquer pour la température des gaz en sortie du ou des modules, la courbe étant organisée en trois zones linéaires : une zone abrupte autour d'une différence Δ voisine de 0, entourée par deux zones de quasi plateaux.
- ledit système calcule la différence Δ entre la température effective du produit en sortie de vis et la consigne de température souhaitée pour le produit en sortie de vis,
- en fonction du signe de la différence Δ et de sa valeur absolue, ledit système détermine sur ladite courbe la ou les consignes de température à injecter dans la ou les boucles de régulation de la température du ou des modules de refroidissement.

2. Procédé selon la revendication 1, dans lequel le fluide réfrigérant est de l'azote liquide.

3. Procédé selon la revendication 2, dans lequel la surface de ladite double enveloppe en contact avec le produit alimentaire est maintenue à une température inférieure ou égale à environ -90°C.

4. Procédé selon la revendication 2 ou 3, dans lequel ledit système applique une logique de régulation selon laquelle plus l'écart Δ est négatif plus le système va demander une consigne de température des gaz voisine de 0°C, plus l'écart Δ tend vers 0 plus le système va demander une consigne de température des gaz voisine d'une température d'équilibre déterminée au préalable, et plus l'écart Δ est positif plus le système va demander une consigne de température des gaz voisine de -196 °C.

5. Procédé selon l'une quelconque des revendications précédentes, dans lequel le produit alimentaire est à une température inférieure d'environ 0,1°C à environ 1°C à son point de congélation commençante en sortie de l'extrudeuse.

6. Procédé selon l'une quelconque des revendications précédentes, dans lequel on applique, pour passer d'un produit donné au traitement d'un nouveau produit différent, deux coefficients multiplicateurs à la courbe du produit précédent pour obtenir la nouvelle courbe s'appliquant au nouveau produit à traiter : un premier coefficient multiplicateur a est appliqué à l'écart Δ, un second coefficient multiplicateur b est appliqué à la consigne injectée pour la régulation des températures des gaz.

7. Procédé selon l'une quelconque des revendications précédentes, **caractérisé en ce que** l'extrudeuse comprend deux vis d'extrusion, préférentiellement deux vis d'extrusion contrarotatives, et plus préférentiellement encore deux vis d'extrusion contrarotatives comprenant au moins une portion du type Archimède et au moins une portion du type malaxeuse.

8. Procédé selon l'une quelconque des revendications précédentes, **caractérisé en ce qu'**il comprend en outre une étape de coupe de l'extrudat à l'aide d'un moyen de coupe placé directement en sortie de la buse, ledit moyen de coupe permettant la découpe du produit alimentaire formé en portions calibrées, et étant de préférence choisi parmi un fil à découpe, une lame, un couperet, des ciseaux, un biseau, ou un couteau rotatif.

9. Procédé selon l'une quelconque des revendications précédentes, **caractérisé en ce qu'**il consiste en la mise en forme simultanée de deux produits alimentaires par coextrusion.

10. Procédé selon l'une quelconque des revendications précédentes, **caractérisé en ce qu'**il comprend en outre une étape d'enregistrement des paramètres de réglages relatifs à l'extrusion pour un ou plusieurs produit(s) donné(s) dans un moyen de supervision, de sorte qu'il suffise à l'opérateur d'indiquer audit moyen de supervision quel produit il souhaite extruder pour que l'extrudeuse soit réglée automatiquement en conséquence.

11. Procédé selon l'une quelconque des revendications précédentes, **caractérisé en ce que** le produit à cryoextruder est choisi parmi les purées de légumes, timbales de légumes, palets et galettes de légumes, les épinards hachés, les potages, veloutés, soupes, bouillons, sauces, plats préparés, préparations de poissons notamment les bâtonnets de poissons, préparations pour crêpes, viande hachée, saucisses, nuggets, herbes surgelées, fromages en portions, gâteaux apéritifs, céréales, fruits, compotes, sauces et nappages sucrés, glaces à l'eau, crèmes glacées et desserts glacés.

## Claims

1. Method for shaping at least one food product by cryoextrusion using an extruder comprising at least one extrusion screw driven by a motor and a nozzle at the output of said at least one extrusion screw, the extruder being provided with a double jacket surrounding the extrusion screw and in which circulates a coolant, the double jacket consisting of one or more independent modules, each module being provided with its coolant intake and its gas extraction, **characterized by** the use of the following measures:
- a data acquisition and processing system is available that is capable of acquiring the temperature of the product at the screw output, of acquiring and managing the gas temperatures at the output of the module or modules and of controlling modifications to the injection or injections of coolant into one or more of said modules,
- a curve has been determined and programmed in said system, the curve being determined for said product to be cryoextruded, representing, on the X axis, the difference Δ between the actual temperature of the product at the output and the temperature setpoint desired for the product at the output, and, on the Y axis, the setpoint to be applied for the temperature of the gases at the output of the module or modules, the curve being organized in three linear regions: an abrupt region around a difference Δ close to 0, surrounded by two almost flat regions,
- said system calculates the difference Δ between the actual temperature of the product at the screw output and the temperature setpoint desired for the product at the screw output,
- and, depending on the sign of the difference Δ and its absolute value, said system determines on said curve the temperature setpoint or setpoints to be injected into the temperature regulation loop or loops of the cooling module or modules.

2. Method according to Claim 1, in which the coolant is liquid nitrogen.

3. Method according to Claim 2, in which the surface of said double jacket in contact with the food product is maintained at a temperature less than or equal to approximately -90°C.

4. Method according to Claim 2 or 3, in which said system applies a regulation logic according to which the more negative the difference Δ is, the more the system will require a temperature setpoint for the gases close to 0°C, the more the difference Δ tends toward 0, the more the system will require a temperature setpoint for the gases close to a previously determined equilibrium temperature, and the more positive the difference Δ is, the more the system will require a temperature setpoint for the gases close to -196°C.

5. Method according to any one of the preceding claims, in which the food product is at a temperature approximately 0.1°C to approximately 1°C bellow its starting freezing point at the output of the extruder.

6. Method according to any one of the preceding claims, in which, to stitch from a given product to the treatment of a new and different product, two multiplying coefficients are applied to the curve of the preceding product to obtain the new curve which applies to the new product to be processed: a first multiplying coefficient a is applied to the difference Δ, a second multiplying coefficient b is applied to the injected setpoint for the regulation of the temperatures of the gases.

7. Method according to any one of the preceding claims, **characterized in that** the extruder comprises two extrusion screws, preferably two counter-rotating extrusion screws, and even more preferably two counter-rotating extrusion screws including at least one portion of the Archimedes type and at least one portion of the mixing machine type.

8. Method according to any one of the preceding claims, **characterized in that** it also includes a step for cutting the extrudate using a cutting means placed directly at the output of the nozzle, said cutting means being used to cut the shaped food product into calibrated portions, and preferably being chosen from a cutting wire, a blade, a cleaver, scissors, a blade taper or a rotary knife.

9. Method according to any one of the preceding claims, **characterized in that** it consists in the simultaneous shaping of two food products by coextrusion.

10. Method according to any one of the preceding claims, **characterized in that** it also includes a step for recording setting parameters relating to the extrusion for one or more given product(s) in a supervision means, so that the operator only has to indicate to said supervision means which product he wants to extrude for the extruder to be automatically set accordingly.

11. Method according to any one of the preceding claims, **characterized in that** the product to be cryoextruded is chosen from vegetable purees, vegetable timbales, vegetable rounds and cakes, chopped spinach, soups, veloutés, broths, stocks, sauces, prepared dishes, fish preparations, in particular fish sticks, preparations for crêpes, chopped meat, sausages, nuggets, deep frozen herbs, cheeses in portions, savory biscuits, cereals, fruit, compotes, sugared sauces and toppings, sherbet, ice creams and frozen desserts.

## Patentansprüche

1. Verfahren zum Formen mindestens eines Nahrungsmittelprodukts durch Kryoextrusion mit Hilfe eines Extruders, welcher mindestens eine von einem Motor angetriebene Extrusionsschnecke und eine Düse am Ausgang der mindestens einen Extrusionsschnecke aufweist, wobei der Extruder mit einem Doppelmantel ausgestattet ist, der die Extrusionsschnecke umgibt und in dem ein Kältefluid zirkuliert, wobei der Doppelmantel aus einem einzigen oder mehreren unabhängigen Modulen besteht, wobei jedes Modul mit einer eigenen Kältefluidzuführung und einem eigenen Gasabzug ausgestattet ist, **gekennzeichnet durch** die Durchführung der folgenden Maßnahmen:
- es steht ein Datenerfassungs- und -verarbeitungssystem zur Verfügung, das geeignet ist, die Temperatur des Produkts am Schneckenausgang zu erfassen, die Gastemperaturen am Ausgang des Moduls oder der Module zu erfassen und zu regeln und Änderungen der Injektion oder Injektionen von Kältemittel in eines oder mehrere der Module zu steuern;
- es wurde eine Kurve bestimmt und in diesem System programmiert, die für das **durch** Kryoextrusion zu formende Produkt bestimmt wurde, wobei als Abszissen X die Differenz Δ zwischen der Isttemperatur des Produkts am Ausgang und dem für das Produkt am Ausgang gewünschten Temperatursollwert und als Ordinaten Y der anzuwendende Einstellwert für die Temperatur der Gase am Ausgang des Moduls oder der Module dargestellt wurde, wobei die Kurve in drei linearen Bereichen organisiert ist: einem Bereich des steilen Abfalls um eine Differenz Δ in der Nähe von 0, umgeben von zwei Bereichen eines nahezu plateauförmigen Verlaufs;
- das System berechnet die Differenz Δ zwischen der Isttemperatur des Produkts am Ausgang der Schnecke und dem für das Produkt am Ausgang der Schnecke gewünschten Temperatursollwert;
- in Abhängigkeit vom Vorzeichen der Differenz Δ und von ihrem absoluten Betrag bestimmt das System anhand der Kurve den oder die Temperatursollwerte, die bei der Injektion in der oder den Regelschleifen der Temperatur des Kühlmoduls oder der Kühlmodule anzuwenden sind.

2. Verfahren nach Anspruch 1, wobei das Kältefluid flüssiger Stickstoff ist.

3. Verfahren nach Anspruch 2, wobei die Fläche des Doppelmantels, die sich mit dem Nahrungsmittelprodukt in Kontakt befindet, auf einer Temperatur gehalten wird, die kleiner als oder gleich etwa -90 °C ist.

4. Verfahren nach Anspruch 2 oder 3, wobei das System eine Regelungslogik anwendet, welche Folgendes beinhaltet: Je stärker die Abweichung Δ im negativen Bereich liegt, desto mehr fordert das System einen Temperatursollwert der Gase in der Nähe von 0 °C an, je mehr sich die Abweichung Δ dem Wert 0 nähert, desto mehr fordert das System einen Temperatursollwert der Gase in der Nähe einer zuvor bestimmten Gleichgewichtstemperatur an, und je stärker die Abweichung Δ im positiven Bereich liegt, desto mehr fordert das System einen Temperatursollwert der Gase in der Nähe Von - 196 6 °C an.

5. Verfahren nach einem der vorhergehenden Ansprüche, wobei das Nahrungsmittelprodukt am Ausgang des Extruders eine Temperatur aufweist, die um etwa 0,1 °C bis etwa 1 °C niedriger als seine Temperatur des beginnenden Gefrierens ist.

6. Verfahren nach einem der vorhergehenden Ansprüche, wobei, um von einem gegebenen Produkt zur Behandlung eines anderen, neuen Produkts zu wechseln, zwei Multiplikationskoeffizienten auf die Kurve des vorhergehenden Produkts angewendet werden, um die neue Kurve zu erhalten, die für das zu behandelnde neue Produkt angewendet wird: Ein erster Multiplikationskoeffizient a wird auf die Abweichung Δ angewendet, ein zweiter Multiplikationskoeffizient b wird auf den bei der Injektion für die Regelung der Temperaturen der Gase angewendeten Einstellwert angewendet.

7. Verfahren nach einem der vorhergehenden Ansprüche, **dadurch gekennzeichnet, dass** der Extruder zwei Extruderschnecken aufweist, vorzugsweise zwei gegenläufig drehende Extruderschnecken, und noch stärker bevorzugt zwei gegenläufig drehende Extruderschnecken, die mindestens einen Abschnitt vom Typ einer Archimedischen Schnecke und mindestens einen Abschnitt vom Typ eines Mischwerks aufweisen.

8. Verfahren nach einem der vorhergehenden Ansprüche, **dadurch gekennzeichnet, dass** es außerdem einen Schritt des Schneidens des Extrudats mit Hilfe eines Schneidmittels aufweist, das direkt am Ausgang der Düse angeordnet ist, wobei das Schneidmittel das Zerschneiden des Nahrungsmittelprodukts in geeichte Portionen ermöglicht und vorzugsweise ausgewählt ist aus einem Schneidedraht, einem Schneidblatt, einem Hackmesser, einer Schere, einem Schneidwerkzeug mit abgeschrägter Schneidfläche und einem Drehmesser.

9. Verfahren nach einem der vorhergehenden Ansprüche, **dadurch gekennzeichnet, dass** es im gleichzeitigen Formen von zwei Nahrungsmittelprodukten durch Koextrusion besteht.

10. Verfahren nach einem der vorhergehenden Ansprüche, **dadurch gekennzeichnet, dass** es außerdem einen Schritt der Registrierung der Parameter von die Extrusion betreffenden Einstellungen für ein oder mehrere gegebene(s) Produkt(e) in einem Überwachungsmittel aufweist, derart, dass der Bediener dem Überwachungsmittel nur anzugeben braucht, welches Produkt er extrudieren möchte, damit der Extruder automatisch entsprechend eingestellt wird.

11. Verfahren nach einem der vorhergehenden Ansprüche, **dadurch gekennzeichnet, dass** das durch Kryoextrusion zu formende Produkt ausgewählt ist aus Gemüsepürees, Gemüsepasteten, Gemüseschnitzeln und Gemüsetalern, gehacktem Spinat, Eintöpfen, Samtsuppen, Suppen, Brühen, Soßen, Fertiggerichten, Fischzubereitungen, insbesondere Fischstäbchen, Zubereitungen für Crepes, Hackfleisch, Würstchen, Nuggets, tiefgekühlten Kräutern, Käse in Stücken, Knabbergebäck, Cerealien, Früchten, Kompotten, süßen Soßen und Zuckergüssen, Wassereis, Eiscremes und Eisdesserts.
